# EUROPEAN PATENT APPLICATION

(11) **EP 3 588 529 A1**
(43) Date of publication of application: **01.01.2020**
(21) Application number: 18179021.3
(22) Date of filing: 21.06.2018
(51) Int. Cl.: H01H 83/00, H02H 7/26, H02H 3/04, H02H 3/00, H02H 1/00

(54) **DIGITAL CIRCUIT BREAKER CONTROLLER**

(71) Applicant: ABB Schweiz AG, 5400 Baden (CH)
(72) Inventor: Roininen, Tomas, 77270 Saxdalen (SE)
(74) Representative: Kransell & Wennborg KB

(57) **Abstract**

There is provided a digital circuit breaker controller (400) for controlling a circuit breaker. The digital circuit breaker controller (400) comprises programming logic configured to handle interlocking functions, configurations, signalling, and control functions of the circuit breaker. The circuit breaker has an operating mechanism, and the digital circuit breaker controller (400) is integrated with the circuit breaker operating mechanism. The digital circuit breaker controller (400) comprises a communication interface (207) to a substation protection and control system.

## Description

### TECHNICAL FIELD

Embodiments presented herein relate to a method, a digital circuit breaker controller, a computer program, and a computer program product for controlling a circuit breaker.

### BACKGROUND

At a present, for the design of a circuit breaker operating mechanism, both control and signaling are handled using electromechanical components, such as switches, relays, time relays etc., requiring an operating voltage most commonly in the order of 110VDC to 220VDC (where VDC is short for Volts of Direct Current). The electromechanical components are wired to terminal blocks in the cubicle in which the circuit breaker operating mechanism is placed. To fulfill the specification of functionality for each customer, several different customer-specific internal wiring configuration of the operating mechanism could exist. The customer thus needs to, according to its customer-specific internal wiring configuration, connect multiple cables to the terminal blocks to facilitate point-to-point cable communication with the substation protection and control system. The communication between different Intelligent Electronical Devices (IEDs) in the substation protection and control room can be digital and, for example, use the IEC61850 protocol.

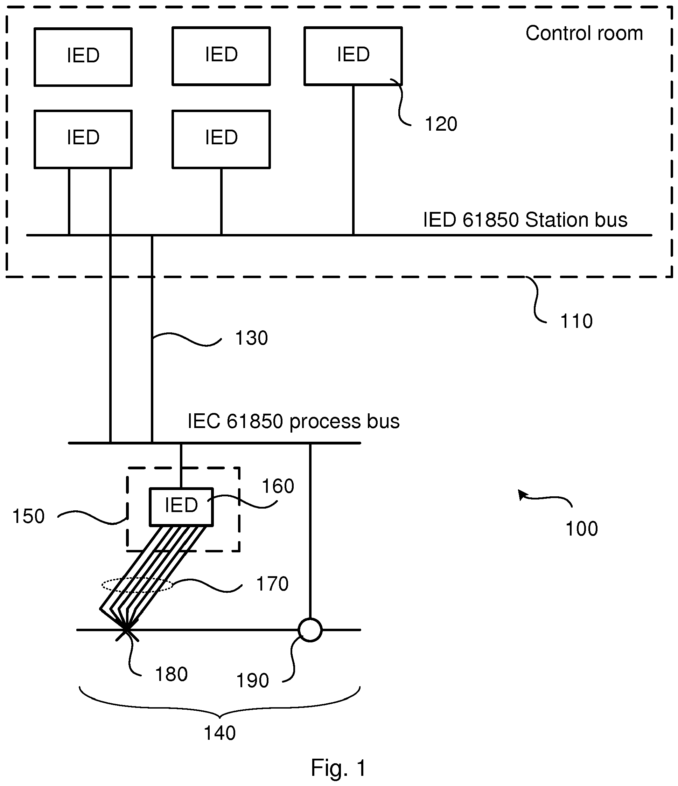

**Fig. 1** is a diagram of a control system 100 for a substation with one bay 140. Protection and control IEDs 120 are placed in the substation protection and control room, defining a substation protection and control system 110, and communicate with each other through the station bus. The bay has one circuit breaker (CB) 180 and one Non-Conventional Current Transformer (NCCT) 190 which directly delivers current data according to the IEC61850 protocol (especially, IEC61850 part 9-2) to the substation protection and control system 110. A separate IED 160 placed in a bay cubicle 150 acts as an interface to the circuit breaker and is configured transform signals via electrical cables 170 to optical signals before forwarding the signals over an IEC61850 process bus to the control room. The wiring from the circuit breaker to the IED is of point-to-point copper cable type, whereby the IED is wired to the terminal blocks in the operating mechanism of the circuit breaker. Further, the circuit breaker wiring is based on using electromechanical components for interlocking and control.

In view of the above, there is still a need for an improved control of the circuit breaker.

### SUMMARY

An object of embodiments herein is to provide efficient control of the circuit breaker.

According to a first aspect there is presented a digital circuit breaker controller for controlling a circuit breaker. The digital circuit breaker controller comprises programming logic configured to handle interlocking functions, configurations, signalling, and control functions of the circuit breaker. The circuit breaker has an operating mechanism, and the digital circuit breaker controller is integrated with the circuit breaker operating mechanism. The digital circuit breaker controller comprises a communication interface to a substation protection and control system.

Advantageously this digital circuit breaker controller provides efficient control of the circuit breaker.

Advantageously, integrating the digital circuit breaker controller with the circuit breaker enables the possibility to minimize the amount of copper cabling of the operating mechanism.

Advantageously, integrating the digital circuit breaker controller with the circuit breaker makes it possible to use comparatively low voltage (for example 24 or 48V) sensors for different input signals to the digital circuit breaker controller.

Advantageously this digital circuit breaker controller makes it possible to have a standardized physical wiring (for example as defined by a cable harness) of the operating mechanism, since all customer specific functionality can be adjusted with software configuration of the digital circuit breaker controller.

According to a second aspect there is presented a control system. The control system comprises at least one digital circuit breaker controller according to the first aspect.

According to a third aspect there is presented a computer program for controlling a circuit breaker, the computer program comprising computer program code which, when run on a digital circuit breaker controller according to the first aspect, causes the digital circuit breaker controller to handle the interlocking functions, configurations, signalling, and control functions of the circuit breaker.

According to a fourth aspect there is presented a computer program product comprising a computer program according to the third aspect and a computer readable storage medium on which the computer program is stored. The computer readable storage medium could be a non-transitory computer readable storage medium.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
**Fig. 1** is a schematic diagram of a substation control system;
**Fig. 2** schematically illustrates part of a circuit breaker operating mechanism according to an embodiment;
**Fig. 3** is a schematic diagram of a control system according to an embodiment;
**Fig. 4** is a schematic diagram showing functional units of a digital circuit breaker controller according to an embodiment; and
**Fig. 5** shows one example of a computer program product comprising computer readable storage medium according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

As disclosed above, in order to digitally control a circuit breaker, an IED might be placed in a separate cubicle close to the circuit breaker. The communication to this IED from the substation protection and control room can then be optical, for example using the IEC61850 protocol. However, the wiring from this IED to the circuit breaker is traditionally of conventional point-to-point copper cable type and wired to the terminal blocks in the operating mechanism of the circuit breaker. Further, the wiring is traditionally based on conventional electromechanical components for interlocking and control. Customized components and wirings will be required for different applications.

Because of the use of point-to-point copper cable wiring and conventional electromechanical components, as well as the requirement of customized components and wirings, such an arrangement for controlling the circuit breaker is bulky, error-prone, and cumbersome to maintain and customize.

There is therefore disclosed a new type of digital circuit breaker controller for controlling the circuit breaker.

The disclosed digital circuit breaker controller comprises programming logic. The programming logic is configured to handle interlocking functions, configurations, signalling, and control functions of the circuit breaker.

Such a digital circuit breaker controller enables simplification of the electrical circuits of the circuit breakers operating mechanism, enables minimization of the amount of point to point connections in the operating mechanism, and enables reduction of the number electromechanical components, such as relays and connectors, needed in the operating mechanism.

The circuit breaker has an operating mechanism, and the digital circuit breaker controller is integrated with the circuit breaker operating mechanism.

Integrating the digital circuit breaker controller with the circuit breaker operating mechanism enables the digital circuit breaker controller to be placed within the same cubicle as the operating mechanism.

Placing the digital circuit breaker controller inside the operating mechanism of the circuit breaker further enables the possibility to minimize the amount of copper cabling of the operating mechanism and will also make it possible to use simpler 24V or 48V sensors for different input signals to the digital circuit breaker controller. Sensors and wiring can be standardized and all customer-specific customization are moved to software configurations of the digital circuit breaker controller.

Placing the digital circuit breaker controller inside the operating mechanism of the circuit breaker further results in that the digital circuit breaker controller has good protection against electromagnetic interference.

One example of signalling of the circuit breaker that the programming logic is configured to handle is signalling between the circuit breaker and the substation protection and control system. The digital circuit breaker controller therefore further comprises a communication interface to the substation protection and control system. Examples of such communication interfaces will be disclosed below. Signalling of the circuit breaker could then be communicated over this communication interface.

Embodiments relating to further details of the digital circuit breaker controller will now be disclosed.

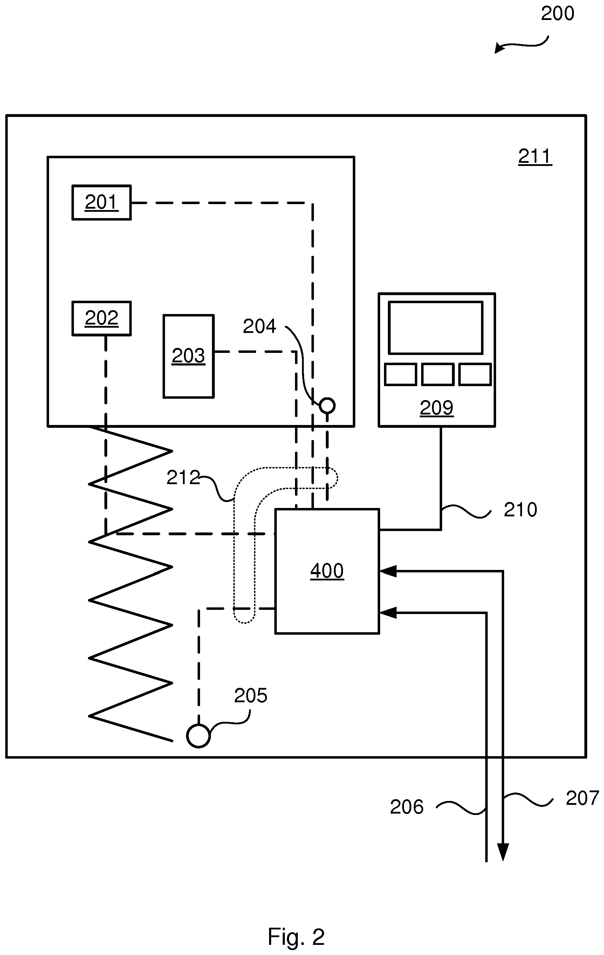

**Fig. 2** is a schematic illustration part of a circuit breaker mechanism 211 of a circuit breaker 200.

There could be different types of operating mechanisms 211. According to some aspects the operating mechanism 211 comprises a hydraulic component, a spring component, a motor, and/or a capacitor bank. The example circuit breaker mechanism of Fig. 2 comprises a trip coil 201, a close coil 202, a charge motor 203, a position sensor 204, a spring charge sensor 205, and a power supply 206.

The digital circuit breaker controller 400 has a communication interface 207 to the substation protection and control system 110.

The digital circuit breaker controller 400 is integrated with the circuit breaker mechanism 211. The proposed digital circuit breaker controller 400 might thus form an integrated part of the circuit breaker operating mechanism 211. The digital circuit breaker controller 400 thereby replaces electro mechanical interlocking components and wirings with transducers and limits the number of electrical components in the operating mechanism. The circuit breaker interlocking functions and control functions are handled by configurable settings of the programming logic of the integrated digital circuit breaker controller 400.

Placing the digital circuit breaker controller 400 inside the operating mechanism 211 of the circuit breaker 200makes it possible to have prefabricated wire harnesses with quick fit connectors to minimize today's substantial production time for wiring of operating mechanism 211. Hence, according to some aspects the digital circuit breaker controller 400 is coupled to components of the circuit breaker mechanism 211 via a cable harness (as schematically illustrated at reference numeral 212). According to some aspects the components to which the digital circuit breaker controller 400 is connected via the cable harness 212 are: trip coils 201, close coils 202, charge motors 203, position sensors 204, spring charge sensors 205, and/or incremental travel transducers. As the skilled person understands, other types of components, for example (but not limited to) pressure sensors, temperature sensors, etc., could be connected to the digital circuit breaker controller 400 via the cable harness 212, for example depending on customization and applications run by the digital circuit breaker controller 400.

The digital circuit breaker controller 400 could have other communication interfaces than the communication interface 207 to the substation protection and control system 110. According to some aspects the digital circuit breaker controller 400 has a communication interface 210 to a local operating panel 209. The digital circuit breaker controller 400 is then configured to provide data to, and receive instructions from, the local operating panel 209. The local operating panel 209 could be regarded as defining a human machine interface (HMI). The collected data can thereby be made available through the communication interface 207 as well as via the local operating panel 209. The collected data can be used for condition monitoring functions. The local operating panel 209 could be a digital operating panel.

There could be different types of communication interfaces 207 to the substation protection and control system 110. In some aspects the communication interface 207 to the substation protection and control system 110 is an optical IEC 61850 interface. The digital circuit breaker controller 400 might then be configured to read data, such as system voltage and current values, from the optical IEC 61850 interface. Such data might be provided as signalling to the digital circuit breaker controller 400. Further, the digital circuit breaker controller 400 might be configured to perform point of wave switching using input, such as system voltage and current values, from the optical IEC 61850 interface. In other aspects the communication interface 207 might be defined by copper cables through which galvanic signals are communicated.

Further functionality of the digital circuit breaker controller 400 will now be disclosed with continued reference to Fig. 2.

According to some aspects the digital circuit breaker controller 400 is further configured to receive trip and close signals from the protection and control system 110, to check for interlocking constraints, and to perform trip and close operations by applying power to trip/close coils of the operating mechanism 211. The digital circuit breaker controller 400 is thereby enabled to check if any of the configured interlocking functions inhibits operation, and if not, to send power to the trip or close coil 201 so as to operate the circuit breaker 200.

According to some aspects the digital circuit breaker controller 400 is further configured to determine status and potential maintenance needs for the circuit breaker 200, as well as the operating mechanism 211. Examples of monitoring functions include, but are not limited to: real time pressure measurements, temperature compensation and signaling, motor supervision based on motor current and/or charge time, trip coil 201 supervision (e.g., by checking the physical integrity of the trip coil(s)), damping functionality, functional values (such as open time, close time, contact speed), and contact erosion evaluation. The contact erosion evaluation can be performed using parameters such as number of operations, normal service current, contact timings, but also the use of actual breaking current measurements from data collected via the communication interface 207.

As an illustrative example, density monitors might be used to check the temperature compensated pressure of gas in the breaking poles. The digital circuit breaker controller 400 might then be configured to continuously receive signals from the density meters. If the pressure is too low, no operation of the circuit breaker might then be allowed. Customization can, by means of configurable settings of the programming logic of the digital circuit breaker controller 400, be made to enable the circuit breaker 200 to automatically trip, block, and send a warning signal at conditions with too low pressure.

According to some aspects the digital circuit breaker controller 400 is further configured to collect signals and data from sensors of the circuit breaker 200 and its operating mechanism 211. According to some aspects the digital circuit breaker controller 400 is further configured to provide the collected signals and data to the substation protection and control system 110 (such as by means of signalling over the communication interface 207). In further detail, the digital circuit breaker controller 400 might be configured to collect data and status from the sensors, where the data and status pertains to at least one of: circuit breaker position, gas pressure, temperature, number of operations, motor current, trip coil integrity, etc.

According to some aspects the digital circuit breaker controller 400 is configured to have a point of wave switching functionality, also known as controlled switching functionality, i.e. having independent time synchronization of the operation of the different phases for single pole operation applications, enabling independent operation of each phase with respect to the sinusoidal voltage in each phase.

The digital circuit breaker controller 400 can be used for many types of circuit breakers, such as, but not limited to: Air Insulated Switchgear (AIS), Gas Insulated switchgear (GIS), Hybrid Switchgear (being a combination of AIS and GIS), Live Tank Circuit Breakers (LTB), Dead Tank circuit breakers (DT). The digital circuit breaker controller 400 can further be used for many voltage ranges.

In some aspects the digital circuit breaker controller 400 is part of a control system 300. Such a control system 300 might comprise at least one digital circuit breaker controller 400 as disclosed herein. In further aspects, the control system 300 further comprises the cable harness 212. In yet further aspects, the control system 300 further comprises the local operating panel 209.

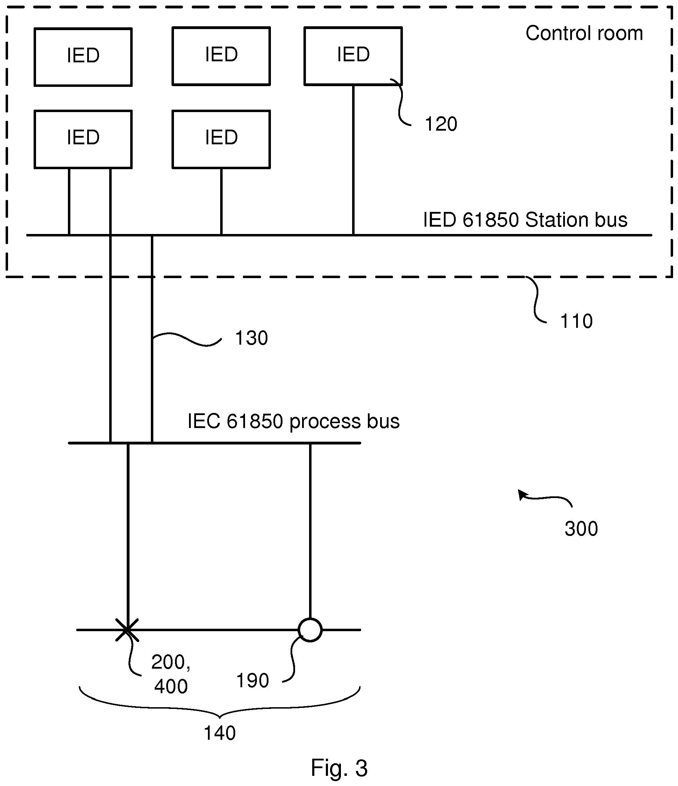

**Fig. 3** is a diagram of a control system 300 for a substation with one bay 140 according to an embodiment. In comparison to Fig. 1, in Fig. 3 the IED in the bay cubicle has been replaced by a digital circuit breaker controller 400 as disclosed herein, where the digital circuit breaker controller 400 thus is integrated with the circuit breaker operating mechanism 211 of the circuit breaker 200.

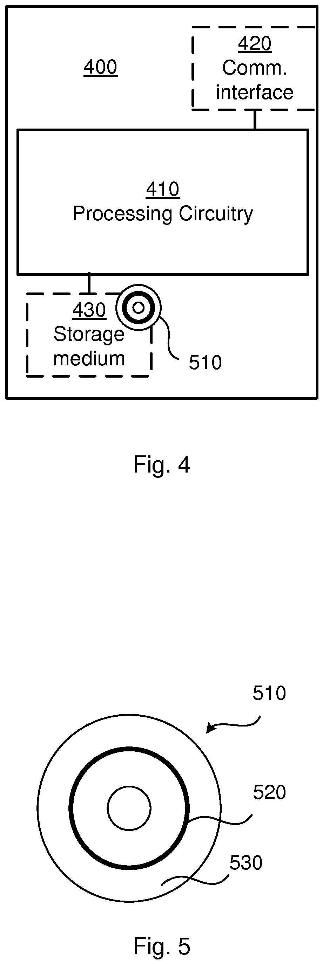

**Fig. 4** schematically illustrates, in terms of a number of functional units, the components of a digital circuit breaker controller 400 according to an embodiment. Processing circuitry 410 is provided using any combination of one or more of a suitable central processing unit (CPU), multiprocessor, microcontroller, digital signal processor (DSP), etc., capable of executing software instructions stored in a computer program product 510 (as in Fig. 5), e.g. in the form of a storage medium 430. The processing circuitry 410 may further be provided as at least one application specific integrated circuit (ASIC), or field programmable gate array (FPGA).

Particularly, the processing circuitry 410 is configured to cause the digital circuit breaker controller 400 to implement the programming logic as disclosed above. For example, the storage medium 430 may store the set of operations, and the processing circuitry 410 may be configured to retrieve the set of operations from the storage medium 430 to cause the digital circuit breaker controller 400 to perform the set of operations. The set of operations may be provided as a set of executable instructions. Thus the processing circuitry 410 is thereby arranged to execute operations of the programming logic. The storage medium 430 may also comprise persistent storage, which, for example, can be any single one or combination of magnetic memory, optical memory, solid state memory or even remotely mounted memory.

The digital circuit breaker controller 400 may further comprise a communication interface 420. As such the communication interface 420 may comprise one or more transmitters and receivers, comprising analogue and digital components. In some aspects the communication interface 420 comprises the communication interface 207 to the substation protection and control system 110, and optionally, the communication interface 210 to the local operating panel 209.

The processing circuitry 410 controls the general operation of the digital circuit breaker controller 400 e.g. by sending data and control signals to the communication interface 420 and the storage medium 430, by receiving data and reports from the communication interface 420, and by retrieving data and instructions from the storage medium 430. Other components, as well as the related functionality, of the digital circuit breaker controller 400 are omitted in order not to obscure the concepts presented herein.

**Fig. 5** shows one example of a computer program product 510 comprising computer readable storage medium 530. On this computer readable storage medium 530, a computer program 520 can be stored, which computer program 520 can cause the processing circuitry 410 and thereto operatively coupled entities and devices, such as the communication interface 420 and the storage medium 430, to execute the functionality of the programming logic according to embodiments described herein. The computer program 520 and/or computer program product 510 may thus provide means for performing the functionality of the programming logic of the digital circuit breaker controller 400 as herein disclosed.

In the example of Fig. 5, the computer program product 510 is illustrated as an optical disc, such as a CD (compact disc) or a DVD (digital versatile disc) or a Blu-Ray disc. The computer program product 510 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 520 is here schematically shown as a track on the depicted optical disk, the computer program 520 can be stored in any way which is suitable for the computer program product 510.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A digital circuit breaker controller (400) for controlling a circuit breaker (200), the digital circuit breaker controller (400) comprising:
programming logic configured to handle interlocking functions, configurations, signalling, and control functions of the circuit breaker (200),
wherein the circuit breaker (200) has an operating mechanism (211), and wherein the digital circuit breaker controller (400) is integrated with the circuit breaker operating mechanism (211), and
wherein the digital circuit breaker controller (400) comprises a communication interface (207) to a substation protection and control system (110).

2. The digital circuit breaker controller (400) according to claim 1, further being configured to collect signals and data from sensors of the circuit breaker and its operating mechanism (211).

3. The digital circuit breaker controller (400) according to claim 2, further being configured to provide the collected signals and data to the substation protection and control system (110).

4. The digital circuit breaker controller (400) according to claim 1, further being configured to receive trip and close signals from the protection and control system (110), to check for interlocking constraints, and to perform trip and close operations by applying power to trip/close coils of the operating mechanism (211).

5. The digital circuit breaker controller (400) according to claim 1, wherein the operating mechanism (211) comprises at least one of a hydraulic component, a spring component, a motor, and a capacitor bank.

6. The digital circuit breaker controller (400) according to claim 1, wherein the communication interface (207) to the substation protection and control system (110) is an optical IEC 61850 interface.

7. The digital circuit breaker controller (400) according to claim 6, wherein the digital circuit breaker controller (400) is configured to read data, such as system voltage and current values, from the optical IEC 61850 interface.

8. The digital circuit breaker controller (400) according to claim 6, wherein the digital circuit breaker controller (400) is configured to perform point of wave switching using input, such as system voltage and current values, from the optical IEC 61850 interface.

9. The digital circuit breaker controller (400) according to claim 1, further being configured to determine status and maintenance needs for the circuit breaker (200) and the operating mechanism (211).

10. The digital circuit breaker controller (400) according to claim 1, wherein the digital circuit breaker (200) is coupled to components of the circuit breaker mechanism (211) via a cable harness (212).

11. The digital circuit breaker controller (400) according to claim 10, wherein the components to which the digital circuit breaker controller (400) is connected via the cable harness (212) are: trip coil (201), close coil (202), charge motor (203), position sensors (204), spring charge sensors (205), and incremental travel transducers.

12. The digital circuit breaker controller (400) according to claim 1, wherein the digital circuit breaker controller (400) has a communication interface (210) to a local operating panel (209) and is configured to provide data to, and receive instructions from, the local operating panel (209).

13. A control system (300), the control system (300) comprises at least one digital circuit breaker controller (400) according to claim 1.

14. The system according to claim 13, wherein the digital circuit breaker (200) is coupled to components of the circuit breaker mechanism via a cable harness (212), and wherein the control system (300) further comprises the cable harness (212).

15. The control system (300) according to claim 13 or 14, wherein the digital circuit breaker controller (400) has a communication interface (210) to a local operating panel (209) and is configured to provide data to, and receive instructions from, the local operating panel (209), and wherein the control system (300) further comprises the local operating panel (209).
